(19) Europäisches Patentamt
European Patent Office
Office européen des brevets

(11) Veröffentlichungsnummer : **0 132 878**
B1

(12) **EUROPÄISCHE PATENTSCHRIFT**

(45) Veröffentlichungstag der Patentschrift :
12.11.86

(51) Int. Cl.⁴ : **B 41 J 3/04**, B 23 P 15/16

(21) Anmeldenummer : 84201024.1

(22) Anmeldetag : 11.07.84

(54) Verfahren und Vorrichtung zur Herstellung einer Düsenplatte für Tintenstrahldrucker.

(30) Priorität : 23.07.83 DE 3326580

(43) Veröffentlichungstag der Anmeldung :
13.02.85 Patentblatt 85/07

(45) Bekanntmachung des Hinweises auf die Patenterteilung : 12.11.86 Patentblatt 86/46

(84) Benannte Vertragsstaaten :
DE FR GB IT SE

(56) Entgegenhaltungen :
DE-A- 2 318 601
DE-A- 3 042 483
FR-A- 2 263 840
GB-A- 2 073 621
US-A- 2 758 361

(73) Patentinhaber : Philips Patentverwaltung GmbH
Billstrasse 80
D-2000 Hamburg 28 (DE)
DE
N.V. Philips' Gloeilampenfabrieken
Groenewoudseweg 1
NL-5621 BA Eindhoven (NL)
FR GB IT SE

(72) Erfinder : Bentin, Horst
Wagrierweg 27
D-2000 Hamburg 61 (DE)
Erfinder : Döring, Michael
Kreuzfurth 17
D-2000 Hamburg 62 (DE)
Erfinder : Kronenberg, Horst
Stresemannallee 77, Pz 224
D-2000 Hamburg 54 (DE)
Erfinder : Jeglinski, Werner
Am Hagen
D-2087 Bönningstedt (DE)

(74) Vertreter : Meier, Friedrich, Dipl.-Ing. et al
c/o PHILIPS PATENTVERWALTUNG GMBH Billstrasse
80 Postfach 10 51 49
D-2000 Hamburg 28 (DE)

EP 0 132 878 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein Verfahren zur Herstellung einer Düsenplatte für Tintenstrahldrucker, bei dem eine Platte von einem die inneren Abmessungen einer Düse aufweisenden Präge- bzw. Stanzstempel in einem Arbeitsgang zunächst durch eine kreisförmige Öffnung einer Prägematrize hindurch gestreckt und anschließend unter weiterer Streckung in einem Schneidekissen zur Düsenbildung gestanzt wird.

Ferner betrifft die Erfindung Mittel und eine Vorrichtung zur Durchführung des Verfahrens.

Sowohl ein Verfahren als auch eine Vorrichtung zur Herstellung einer Düsenplatte sind bereits aus der DE-OS 30 42 483 bekannt. Bei dem bekannten Verfahren hat sich gezeigt, daß die Qualität der austrittsseitigen Düsenränder relativ stark von der Oberflächenstruktur des Düsenplattenmaterials abhängig ist. So reißen beim Stanzen der Platten die sich bildenden Düsenränder u. a. infolge von Überdehnung des Düsenplattenmaterials ungleichmäßig ab, was zu unsymmetrischen bzw. rauhen Düsenrändern führt.

Aufgabe der Erfindung ist es, ein Verfahren und Mittel zur Herstellung von Düssenplatten für Tintenstrahldrucker anzugeben, mit dessen Hilfe Düsen mit gegenüber den bekannten Düsen glatteren Düsenrändern herstellbar sind.

Die Aufgabe wird gemäß der Erfindung dadurch gelöst, daß der Platte an ihrer dem Stempel abgekehrten Seite eine Metallfolie aus einem gegenüber der Düsenplatte härteren Material unterlegt, und dann durch die kreisförmige Öffnung hindurch gestreckt und gestanzt wird. Vorteilhaft ist es, als Metallfolie ein Material ohne mechanische Vorzugsrichtung zu verwenden.

Nach dem Stanzen wirkt der verbleibende Rest der Metallfolie als eine Art Zusatzmatrize und symmetriert die Form des Düsenrandes bei gleichzeitiger Verdichtung des Materials, was zu glatteren Düsenrändern führt.

Für die Ausbildung der Tintenstrahldüsen ist die zu stanzende Platte direkt auf die Metallfolie aufgelegt. Ein mit dem Präge- bzw. Stanzstempel verbundener Niederhalter drückt vor dem Strecken und Stanzen sowohl die Platte als auch die darunter liegende Metallfolie gegen die Prägematrize bzw. gegen das Schneidekissen, so daß auf diese Weise die Metallfolie zwischen der Prägematrize und der Düsenplatte fest eingespannt ist.

Nach einer vorteilhaften Ausbildung der Erfindung kann die Metallfolie entweder aus amorphem Material, z. B. amorphem Eisen, oder aus einem mikrokristallinen Material mit sehr kleinen Korngrößen, z. B. aus galvanisch gewachsenem Chrom, bestehen. Die Stärke der Metallfolie beträgt vorzugsweise etwa 20 bis 25 μm.

Derartige Metallfolien aus amorphem oder mikrokristallinem Material, das keine mechanische Vorzugsrichtung, z. B. Walzrichtung oder dergl., besitzt, eignet sich am besten zum randscharfen Abtrennen des beim Stanzen entstehenden Teilstückes (Butzen) vom restlichen Material, und damit zur Herstellung hochpräziser Düsen mit scharfkantigen, glatten Rändern.

Die Zeichnung stellt ein Ausführungsbeispiel der Erfindung dar. Es zeigen :

Figur 1 eine Vorrichtung zur Durchführung des Verfahrens gemäß der Erfindung,

Figur 2 die Vorrichtung nach Fig. 1 während des Prägevorganges und

Figur 3 die Vorrichtung nach Fig. 1 nach dem Stanzvorgang.

In einem Niederhalter 4 ist eine den Stanz- bzw. Prägestempel 2 tragende Druckplatte 1 verschiebbar angeordnet. Wird auf die Druckplatte 1 eine Druck P ausgeübt, so wird auch der Niederhalter 4 in Richtung des Pfeiles P verschoben, bis die Unterseite des Niederhalters 4 auf der zu verformenden Düsenplatte 5 aufliegt. Bei weiterem Druck wird dann der Stempel 2 durch die Öffnung des Niederhalters 4 bewegt.

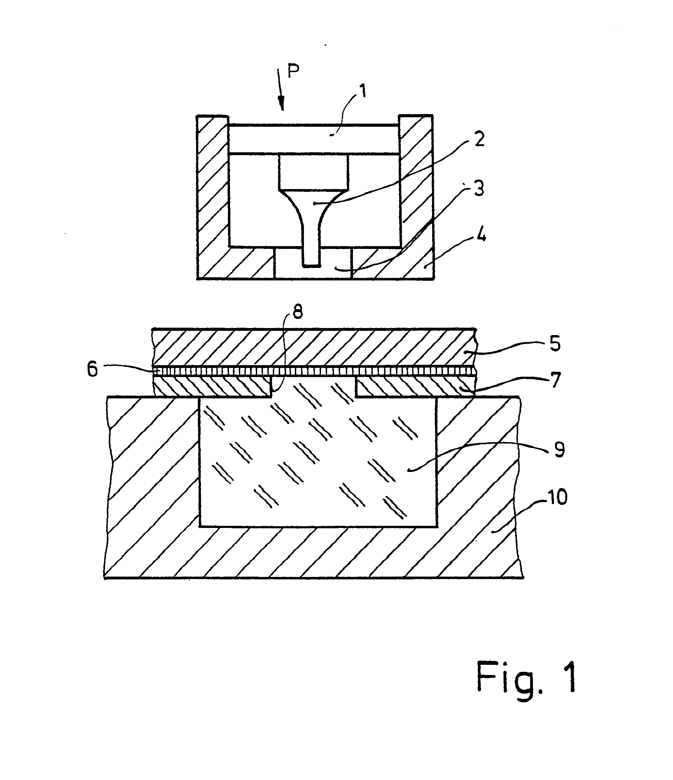

Auf der dem Stempel 2 gegenüberliegenden Seite der Düsenplatte 5 befindet sich eine Metallfolie 6, die an der Düsenplatte 5 anliegt. Die Metallfolie 6 liegt auf einer Prägematrize 7, die eine kreisförmige Öffnung 8 zur Ausbildung der gewünschten Düsen aufweist. Die Prägematrize 7 liegt ihrerseits auf einem Block bzw. Schneidkissen 9, das in einer Öffnung einer Unterlage 10, die vorzugsweise aus Stahl oder Gußeisen bestehen kann, angeordnet ist. Das Schneidkissen 9 besteht aus Blei oder einem anderen geeigneten Material mit ähnlichen mechanischen Eigenschaften. Das Schneidkissen 9 kann so ausgebildet sein, daß ein Teil davon die kreisförmige Öffnung 8 ausfüllt und damit an der Metallfolie 6 von unten her anliegt. Dabei ist das Schneidkissen 9 in der Unterlage 10 so positionierbar, daß es nach Abschluß eines jeden Stanzvorganges gemeinsam mit der Metallfolie 6 und der Prägematrize 7 z. B. senkrecht zur Papierebene der Fig. 1 verschoben werden kann, so daß danach in einer anderen Öffnung 8 der Prägematrize 7 unbenutzte Bereiche der Metallfolie 6 und des Schneidkissens 9 dem Stempel 2 gegenüber zu liegen kommen. Die Verschiebung erfolgt dabei um jeweils den Abstand zweier in der Prägematrize 7 angeordneter benachbarter kreisförmiger Öffnungen 8.

Für den Fall, daß das Schneidkissen 9 nicht in eine kreisförmige Öffnung 8 eingreift, brauchen nach jeweils einem Stanzvorgang nur die Metallfolie 6 und das Schneidkissen 9 verschoben zu werden.

Die Form des Stempels 2 ist der vorbestimmten Form der Düse angepaßt und besitzt eine riefenfrei polierte Oberfläche und eine homogene Härte. Die homogene Härte kann beispielsweise durch ein Salzbad erreicht werden. Der vordere Teil des Stempels 2 hat im vorliegenden Beispiel einen Durchmesser von 50 μm, der sich bis zum hinteren Teil auf 300 μm vergrößert.

Die Düsenplatte 5 besteht aus reinem Nickel, das zur Verringerung seiner Härte weichgeglüht ist. Die Nickelplatte 5 ist an der der Metallfolie 6 gegenüberliegenden Seite poliert. Sie besitzt eine Dicke von etwa 300 μm.

Die Metallfolie 6 besitzt eine Stärke von 20 bis 25 μm und besteht aus einem Material, das gegenüber dem der Düsenplatte 5 sehr viel härter ist. Beispielsweise besteht die Metallfolie 6 aus amorphem Eisen, das eine Vickers-Härte von 800 bis 1 000 $VH_{02}$ besitzt. Die Metallfolie 6 kann aber auch aus mikrokristallinem Material, wie etwa galvanisch gewachsenem Chrom bestehen. Materialien dieser Art besitzen keine mechanische Vorzugsrichtung, z. B. Walzrichtung oder dergl., so daß ein randscharfes Abtrennen des ausgestanzten Butzens und damit die Herstellung sehr scharfer und glatter Düsenränder möglich ist. Selbstverständlich kann der amorphen Eisenfolie 6 z. B. auch Silizium und Bor zugesetzt sein, so daß sich ihre Härte vergrößert und somit noch präzisere Düsenränder herstellbar sind.

Die unterhalb der Metallfolie 6 liegende Prägematrize 7 besteht zus Stahl und besitzt eine Dicke, die größenordnungsmäßig der der Düsenplatte 5 entspricht.

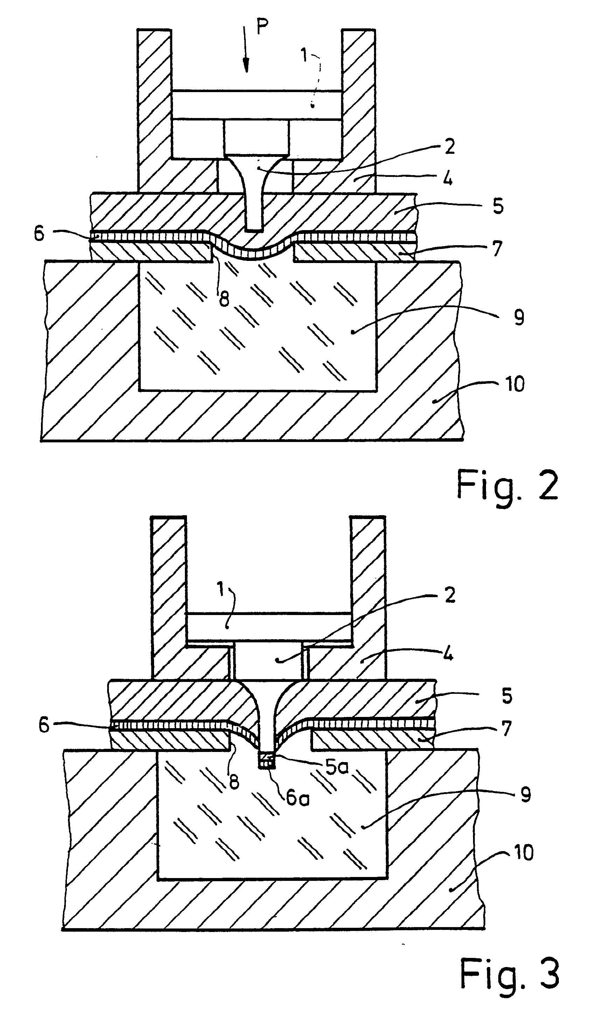

Während in Fig. 1 der Ausgangszustand des Präge- und Stanzvorganges dargestellt ist, zeigt die Fig. 2 den Prägevorgang. Der trompetenförmig ausgebildete Stempel 2 ist mit seinem vorderen Teil in die Düsenplatte 5 eingedrungen und hat dabei sowohl die Düsenplatte 5 als auch die Metallfolie 6 in die kreisförmige Öffnung 8 und in das Schneidkissen 9 hineingedrückt. Wird auf den Stempel 2 der Druck P weiterhin aufrechterhalten, so beginnt nun der eigentliche Stanzvorgang, wobei die Düsenplatte 5 und die Metallfolie 6 im Bereich des Stempels 2 weiter gestreckt werden. Die aus der Düsenplatte 5 und der Metallfolie 6 herausgestanzten Butzen 5a, 6a werden in das Schneidkissen 9 hineingedrückt und von diesem festgehalten. Nach dem Stanzvorgang und nach der Zurückführung des Stempels 2 und des Niederhalters 4 wird das Schneidkissen 9 zusammen mit der Prägematrize 7 verschoben, so daß anschließend dem Stempel 2 wiederum unbenutzte Teile der Metallfolie 6 und des Schneidkissens 9 gegenüberliegen. Die durch dieses Präge-Stanzverfahren hergestellten Tintenstrahldüsen sind sehr präzise und weisen scharfkantige glatte Ränder auf, die symmetrisch benetzen.

Sollen mehrere Düsen in die Düsenplatte 5 eingestanzt werden, so können die entsprechenden Stanzwerkzeuge seitlich gegeneinander verschoben werden. Es ist aber auch möglich, ein so ausgebildetes Stanzwerkzeug gleichzeitig mit mehreren nebeneinander angeordneten Stempeln zu versehen. In diesem Falle ist keine Verschiebung der Stanzwerkzeuge gegeneinander notwendig, da sämtliche Düsenöffnungen gleichzeitig und nicht nacheinander hergestellt werden.

**Patentansprüche**

1. Verfahren zur Herstellung einer Düsenplatte für Tintenstrahldrucker, bei dem eine Platte von einem die inneren Abmessungen einer Düse aufweisenden Präge- bzw. Stanztempel in einem Arbeitsgang zunächst durch eine kreisförmige Öffnung einer Prägematrize hindurch gestreckt und anschließend unter weiterer Streckung in einem Schneidekissen zur Düsenbildung gestanzt wird, dadurch gekennzeichnet, daß der Platte an ihrer dem Stempel (2) abgekehrten Seite eine Metallfolie (6) aus einem gegenüber der Düsenplatte härteren Material unterlegt, und dann die Platte durch die kreisförmige Öffnung (8) hindurch gestreckt und gestanzt wird.

2. Anwendung einer Metallfolie zur Durchführung des Verfahrens nach Anspruch 1, dadurch gekennzeichnet, daß die Metallfolie aus einem Material ohne mechanische Vorzugsrichtung, z. B. Walzrichtung besteht.

3. Anwendung einer Metallfolie nach Anspruch 2, dadurch gekennzeichnet, daß die Metallfolie aus amorphem Material, z. B. amorphem Eisen besteht.

4. Anwendung einer Metallfolie nach Anspruch 2, dadurch gekennzeichnet, daß die Metallfolie aus mikrokristallinem Material besteht.

5. Anwendung einer Metallfolie nach Anspruch 4, dadurch gekennzeichnet, daß die Metallfolie aus galvanisch gewachsenem Chrom besteht.

6. Anwendung einer Metallfolie nach einem oder mehreren der Ansprüche 2 bis 5, dadurch gekennzeichnet, daß die Metallfolie eine Stärke von etwa 20 bis 25 μm hat.

7. Vorrichtung zur Durchführung des Verfahrens nach Anspruch 1, mit einem Präge- bzw. Stanzstempel (2) sowie einem den Stempel aufnehmenden Schneidekissen (9), auf dem eine Prägematrize (7) mit kreisförmiger Öffnung (8) zur Bildung einer Düse aufliegt, gekennzeichnet durch Spannelemente, durch die die Metallfolie (6) zusammen mit der Platte (5) zwischen Niederhalter (4) und Prägematrize (7) so eingespannt ist, daß die Metallfolie (6) als Abdeckung auf der kreisförmigen Öffnung aufliegt.

8. Vorrichtung nach Anspruch 7, dadurch gekennzeichnet, daß das Schneidekissen (9) aus Blei besteht.

**Claims**

1. A method of manufacturing a nozzle plate for ink jet printers, in which in one operation a plate in which a nozzle is to be formed is first stretched through a circular aperture in a pressing die by a pressing and punching tool whose dimensions correspond to the internal dimensions of a nozzle, and is subsequently punched while being stretched further in a cushion, characterized in that a metal foil (6) of a material which is harder that that of the plate is arranged against the side of the plate which is remote from the tool (2), after which the plate is stretched and punched through the circular aperture (8).

2. The use of a metal foil for performing the method claimed in Claim 1, characterized in that the metal foil consists of a material which does not have a preferred mechanical orientation, for example a rolling direction.

3. The use of a metal foil as claimed in Claim 2, characterized in that the metal foil consists of an amorphous material, for example, iron.

4. The use of a metal foil as claimed in Claim 2, characterized in that the metal foil consists of a microcrystalline material.

5. The use of a metal foil as claimed in Claim 4, characterized in that the metal foil consists of electro-formed chromium.

6. The use of a metal foil as claimed in one or more of the Claims 2 to 5, characterized in that the metal foil has a thickness of from approximately 20 to 25 μm.

7. An apparatus for performing the method claimed in Claim 1, comprising a pressing and punching tool (2) as well as a cushion (9) which receives the tool and on which there is arranged a pressing die (7) having a circular aperture (8) for the formation of a nozzle, characterized by clamping means whereby the metal foil (6), together with the plate (5) is clamped between holding means (4) and pressing die (7) so that the metal foil (6) covers the circular aperture.

8. An apparatus as claimed in Claim 7, characterized in that the cushion (9) is made of lead.

**Revendications**

1. Procédé de fabrication d'une plaque à tuyères pour une imprimante à jet d'encre, suivant lequel, dans une seule étape, sous l'action d'un outil d'emboutissage et de découpage dont les dimensions correspondent aux dimensions intérieures d'une tuyère, une plaque est d'abord pressée à travers une ouverture circulaire d'une matrice d'emboutissage et ensuite, le pressage continuant, découpée dans un coussinet de filière pour former la tuyère, caractérisé en ce que, du côté de la plaque située à l'opposé de l'outil (2), est disposée une feuille métallique (6) en matériau plus dur que celui de la plaque à tuyères et en ce que la plaque est ensuite pressée et découpée à travers l'ouverture circulaire (8).

2. Application d'une feuille métallique à la mise en œuvre du procédé selon la revendication 1, caractérisée en ce que la feuille métallique est en matériau qui ne présente pas d'orientation mécanique préférentielle, telle qu'une direction de laminage.

3. Application d'une feuille métallique selon la revendication 2, caractérisée en ce que la feuille métallique est en matériau amorphe, par exemple du fer amorphe.

4. Application d'une feuille métallique selon la revendication 2, caractérisée en ce que la feuille métallique est en matériau microcristallin.

5. Application d'une feuille métallique selon la revendication 4, caractérisée en ce que la feuille métallique est en chrome obtenu par croissance électrolytique.

6. Application d'une feuille métallique selon une ou plusieurs des revendications 2 à 5, caractérisée en ce que la feuille métallique a une épaisseur comprise entre 20 et 25 μm environ.

7. Dispositif de mise en œuvre du procédé selon la revendication 1, muni d'un outil (2) d'emboutissage et de découpage ainsi que d'un coussinet de filière (9) qui reçoit l'outil et sur lequel est appuyée une matrice d'emboutissage (7) présentant une ouverture circulaire (9) pour la formation d'une tuyère, caractérisé par des éléments de serrage au moyen desquels la feuille métallique (6), conjointement avec la plaque (5), est serrée entre le presse-plaque (4) et la matrice d'emboutissage (7) de façon que la feuille métallique (6) recouvre l'ouverture circulaire.

8. Dispositif selon la revendication 7, caractérisé en ce que le coussinet de filière (9) est en plomb.

0 132 878

Fig. 1

1

0 132 878

Fig. 2

Fig. 3

2